# FASCICULE DE BREVET EUROPEEN

(11) **EP 0 707 934 B1**
(45) Date de publication et mention de la délivrance du brevet: **05.01.2000**
(21) Numéro de dépôt: 95115959.9
(22) Date de dépôt: 10.10.1995
(51) Int. Cl.: B29C 33/10

(54) **Eventation de moules**
Entlüftung von Formen
Venting moulds

(30) Priorité: 20.10.1994 FR 9412654
(43) Date de publication de la demande: 24.04.1996
(73) Titulaire: COMPAGNIE GENERALE DES ETABLISSEMENTS MICHELIN - MICHELIN & CIE, 63040 Clermont-Ferrand Cédex (FR)
(72) Inventeur: Espie, Jacques, F-63430 Pont-Du-Chateau (FR); Labarre, Daniel, F-63000 Clermont-Ferrand (FR); Rey, Maurice, F-63118 Cebazat (FR)
(74) Mandataire: Bauvir, Jacques

(56) Documents cités:
- EP-A- 0 576 892
- DE-A- 1 965 121
- FR-A- 1 394 552
- US-A- 3 822 857
- US-A- 4 740 145
- PATENT ABSTRACTS OF JAPAN vol. 011 no. 102 (M-576) ,31 Mars 1987 & JP-A-61 252109 (BRIDGESTONE CORP) 10 Novembre 1986,

## Description

La présente invention concerne les moules, notamment pour mouler les pneumatiques, et en particulier les techniques d'éventation utilisées dans ces moules, pour permettre à l'air emprisonné entre le moule et une ébauche crue de pneumatique de s'échapper vers l'extérieur.

Les moules pour pneumatiques sont souvent équipés d'un certain nombre d'évents disposés à des endroits judicieux. Ces évents sont par exemple le plus souvent des perçages de petit diamètre reliant la cavité intérieure du moule à l'extérieur du moule. Comme il n'est pas possible de réaliser des perçages de diamètre extrêmement réduit, en raison de limitations inhérentes aux techniques d'usinage, il en résulte que le diamètre de ces trous est en général suffisant pour permettre au caoutchouc de fluer au moins légèrement à l'intérieur de ces perçages lorsque l'on moule le pneumatique. C'est pour cela que l'on aperçoit à la surface de nombreux pneumatiques de petits brins de caoutchouc faisant légèrement saillie par rapport à la surface extérieure.

On a cherché bien entendu à réduire les dimensions des évents à un niveau suffisamment petit pour empêcher le caoutchouc cru de fluer à l'intérieur des interstices d'éventation, tout en autorisant l'air à s'échapper vers l'extérieur du moule. Pour réduire le diamètre des évents en deçà de ce qu'il est possible de faire par des techniques de perçage direct sur le moule, il a été proposé de réaliser sur le moule un perçage de relativement grand diamètre, et d'insérer à l'intérieur de celui-ci un évent qui, lui, comporte un perçage ou une fente ou un interstice de dimension extrêmement réduite. A titre d'exemple on peut consulter le brevet US 4 447 197 qui décrit un évent de ce genre. Un autre exemple est décrit dans le brevet US 3 854 852, où l'on voit un évent de type "soupape", qui se ferme au moment où le caoutchouc cru entre en contact avec la tête de la soupape, après avoir laissé s'échapper l'air emprisonné entre le caoutchouc cru et le moule. Les brevets FR 1 394 552 (correspondant au préambule de la revendication 1) et US 3 882 857 en montrent d'autres évents connus.

Les évents connus dans l'état de la technique présentent de nombreux inconvénients. Si certains d'entre eux permettent à l'air de s'échapper tout en empêchant effectivement l'apparition de bavures de moulage sur le pneumatique vulcanisé, en général leur durée de fonctionnement satisfaisant reste très faible. Cela oblige à entretenir le moule bien trop fréquemment. Il faut donc le démonter régulièrement de la presse de vulcanisation, et l'immobiliser le temps nécessaire aux opérations d'entretien. En outre, il n'est pas toujours possible de restaurer la capacité d'éventation de ces évents. on doit donc les remplacer assez régulièrement. Cela conduit à augmenter le prix de revient industriel de ces techniques d'éventation. De plus, dans le cas d'évents de type soupape, le prix de revient de départ de tels évents est relativement élevé.

En ce qui concerne la bande de roulement des pneumatiques, on recourt à différents moyens d'éventation : implantation d'évents tels que décrits ci-dessus, réalisation de simples perçages, ou alors on sait aussi profiter des fentes qui existent entre les différentes pièces du moule (plans de joints entre pièces), afin de conduire l'air depuis l'intérieur de la cavité de moulage jusqu'à l'extérieur du moule. Au besoin, on choisit judicieusement, par rapport à la sculpture du pneumatique, les endroits où vont passer les plans de joints entre les différentes parties du moule afin que l'on trouve chaque fois que possible une fente là où il faut éventer le moule.

A titre d'illustration de cette dernière technique, on peut consulter le brevet US 5 234 326. Dans ce dernier cas, pour certaines sculptures, il est possible de concevoir une éventation complète de moule de pneumatique qui ne nécessite pas le perçage d'évents. Pour d'autres sculptures cependant, il n'est pas possible d'atteindre ce but. Dès lors, même dans la partie bande de roulement d'un moule pour pneumatique, il n'est pas toujours possible d'éviter de recourir à des perçages ou des évents.

Or, on cherche à atteindre une qualité de moulage toujours plus grande. Les bavures de moulage qui apparaissent à la surface du pneumatique, que ce soit sous forme de petites lamelles ou sous forme de petits brins, sont nuisibles même dans le cas où le volume de caoutchouc ayant flué reste très faible, car l'aspect du pneumatique est tel que la qualité perçue par l'acheteur considérée conune faible.

Il se pose donc toujours le problème de réussir à organiser une éventation complète d'un moule pour pneumatique, et de réussir à le faire par des moyens robustes, c'est-à-dire des moyens ne nécessitant que très peu d'entretien en exploitation industrielle. Il se pose également le problème de concevoir une éventation peu coûteuse, dont l'entretien soit aussi simple que possible, afin de pouvoir être pris en charge très facilement par les ateliers de fabrication de pneumatiques, sans obliger à réexpédier le moule dans un atelier de construction de moule pour qu'il y subisse une rénovation.

L'invention propose un moule ayant une cavité de moulage limitée par des parois de moulages réalisées en une ou plusieurs matières, chaque paroi de moulage ayant une surface de moulage étanche définissant une partie de la forme de la surface extérieure de l'objet à mouler, au moins une paroi comprenant au moins un perçage s'étendant à partir de ladite surface au travers de ladite paroi pour mettre en communication la cavité de moulage avec l'extérieur dudit moule, ledit perçage étant obturé par un insert ayant une face d'extrémité étanche affleurant à ladite surface pour constituer une partie de la surface de moulage, caractérisé en ce que ledit moule comporte des moyens principaux d'éventation et des moyens d'éventation complémentaire, ledit insert appartenant aux moyens d'éventation complémentaire, ledit insert occupe exactement la totalité de la surface dudit perçage dans ladite surface de moulage et en ce que ledit insert est réalisé en une matière dont la dureté est nettement inférieure à la dureté de la matière constituant essentiellement ladite paroi, ledit insert ayant, avant montage dans le perçage, une section circonscrite à la section dudit perçage, au moins du côté destiné à affleurer à ladite surface de moulage, ledit insert étant emmanché en force dans ledit perçage.

La solution proposée par cette invention ne permet bien entendu que de réaliser une éventation à relativement faible débit d'air. C'est pourquoi elle est en général à utiliser en complément avec d'autres techniques d'éventation, exploitant les fentes existant entre les différentes pièces de moules, ou bien, pour ce qui concerne en particulier les flancs du moule, une technique comme celle décrite dans le brevet EP 0 576 892. La technique proposée par l'invention, malgré son faible débit, s'avère cependant tout à fait intéressante pour parfaire l'éventation, notamment dans le cas de pneumatiques comportant des sculptures particulières, ou toujours pour les pneumatiques, dans certaines zones du flanc ou du bourrelet, où l'on a rencontré dans le passé de plus grandes difficultés d'éventation.

Contrairement aux nombreuses tentatives que l'on peut voir notamment dans les demandes de brevet, la présente invention ne propose pas de réaliser un évent de forme très sophistiquée, pas plus qu'elle ne propose de réaliser un évent comportant des pièces mobiles, ni d'utiliser des matières poreuses. Bien que le jeu entre l'insert et le perçage qui le reçoit soit théoriquement nul, on a constaté expérimentalement que l'air pouvait s'échapper. Le dimensionnement de l'insert proposé comme moyen d'éventation est extrêmement simple, l'éventation reste facile à réaliser, même dans un atelier peu spécialisé, comme dans une unité de production de pneumatiques, afin d'obtenir des interstices d'éventation là où on le souhaite.

De façon tout a fait inattendue, il n'est pas nécessaire de chercher à disposer, au niveau de la surface moulante du moule, un orifice d'échappement de l'air de très petites dimensions. Alors que tous les évents connus dans l'état de la technique laissent matériellement apparaître des perçages ou des fentes à la surface moulante, la présente invention propose d'utiliser une sorte d'évent que l'on pourrait presque qualifier de "borgne", si ce n'était son aptitude observée expérimentalement à laisser s'échapper de l'air. On a pu remarquer que, même en réalisant un ajustement serré entre l'insert et le perçage qui le reçoit, le montage de l'insert dans le perçage ne se fait pas de façon infiniment étanche. Il en résulte un débit de fuite qui peut contribuer dans une très grande mesure à éventer le moule, car le rôle joué par ces évents intervient principalement dans des zones dites de dernier moulage, parfois extrêmement difficiles à éventer.

Bien entendu, le perçage apparaissant à la surface du moule est de forme quelconque. Le plus simple est de réaliser un perçage circulaire avec un foret. Un diamètre de perçage qui s'avère intéressant à adopter est compris entre 2 et 3 mm. Ainsi, la trace de l'insert apparaissant à la surface de moulage de la paroi du moule est inférieure à une valeur de l'ordre de 10 mm2. De préférence, cette surface reste inférieure à 100 mm2.

L'invention propose aussi un procédé de réalisation d'un moule, ledit moule ayant une cavité de moulage limitée par des parois comportant chacune une surface de moulage, lesdites parois étant réalisées en une ou plusieurs matières, comprenant les étapes suivantes :
- réaliser, dans au moins une paroi, au moins un perçage s'étendant à partir de la surface de ladite paroi au travers de ladite paroi jusqu'à l'extérieur dudit moule,
- enfoncer dans ledit perçage, du côté de ladite surface de moulage, un insert dont la matère constitutive présente une dureté nettement inférieure à la dureté de la matière constituant ladite paroi aux environs du perçage, ledit insert, une fois enfoncé, occupant exactement la totalité de la surface du perçage au moins au niveau de ladite surface de la paroi, et étant immobilisé par serrage à l'intérieur dudit perçage et faisant au moins légèrement protubérance par rapport à ladite surface,
- araser ledit insert au niveau de ladite surface.

Les figures suivantes illustrent une mise en oeuvre de l'invention où l'on utilise un insert réalisé en matière plastique, enchâssé dans un moule pour pneumatique, réalisé en fonderie d'aluminium ou bien en acier. Une matière plastique convenant bien pour cet insert est le PPS (polysulfure de phénylène), chargé avec de la fibre de carbone à 30 % en masse, ou bien le PEEK (polyéther-éther cétone) chargé de la même façon. Cet exemple n'est bien entendu pas limitatif. Cela permet d'utiliser deux matières dont les duretés sont très différentes.
La figure 1 est une vue en élévation d'un premier mode de réalisation d'un insert selon l'invention ;
la figure 2 est une vue de bout du même insert ;
la figure 3 est une vue en élévation d'un second mode de réalisation d'un insert selon l'invention ;
la figure 4 est une vue de bout du second insert ;
la figure 5 montre en coupe radiale une coquille d'un moule pour pneumatique comportant un perçage devant lequel est présenté un insert selon l'invention ;
la figure 6 montre le même insert légèrement engagé dans le perçage ;
la figure 7 montre le même insert enchâssé dans la coquille ;
la figure 8 montre le moule équipé de son éventation, prêt à être utilisé pour mouler un pneumatique.

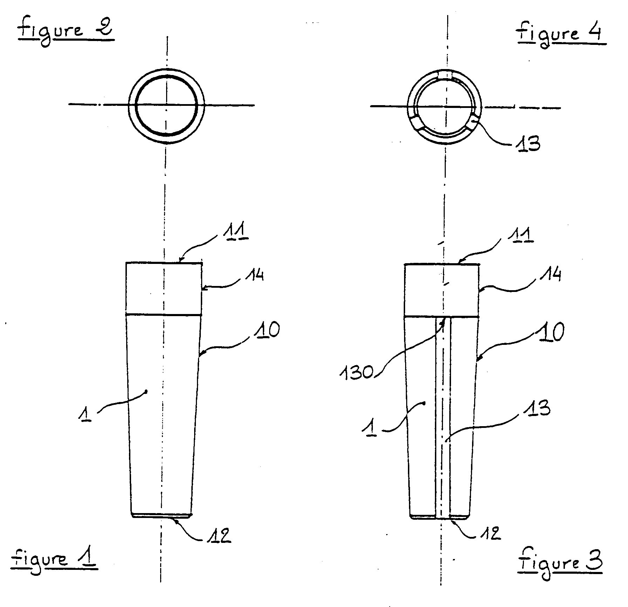

L'insert 1 selon l'invention se présente comme une tige allongée, ayant l'allure d'une goupille (voir figures 1 à 4). l'insert présente une surface latérale 10 et au moins une face d'extrémité 11 et une extrémité opposée 12. L'allure exacte de cette extrémité opposée 12 est secondaire : elle peut tout aussi bien être une pointe effilée qu'une surface plane, connue représenté aux dessins. Sur la surface latérale 10, il est possible de prévoir des rainures 13 débutant à ladite extrémité opposée 12, et se terminant en retrait de ladite face d'extrémité 11. Ces rainures sont destinées à faciliter le cheminement de l'air vers l'extérieur du moule.

On peut réaliser très facilement de tels inserts par moulage d'une matière plastique. Suivant un aspect de la présente invention, les rainures 13, lorsqu'elles existent, ne débouchent pas à la surface moulante des parois du moule pour pneumatique. Elles ne débouchent donc pas à la surface d'extrémité 11. Il subsiste un anneau 14 présentant une surface régulière, non rainurée, par exemple cylindrique ou légèrement tronconique. Connue on le voit bien aux figures 3 et 4, ladite surface latérale 10, qui est au moins en parne tronconique, est telle que la section dudit insert 1 va en se rétrécissant en se déplaçant vers le côté où lesdites rainures 13 débouchent à ladite extrémité opposée 12.

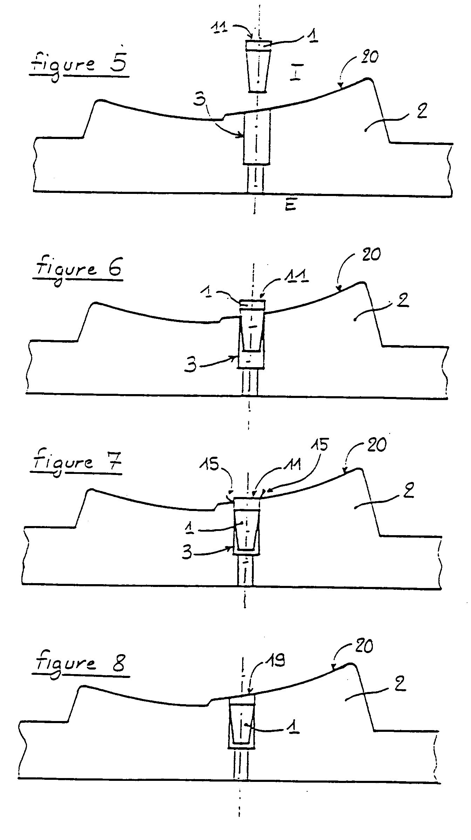

L'évent selon l'invention est donc un simple insert que l'on va monter dans un trou aménage sur le moule connue expliqué ci-après. A la figure 5, on reconnaît l'une des pièces classiques constituant un moule pour pneumatique, à savoir une coquille 2 destinée à mouler l'un des flancs du pneumatique. La surface intérieure 20 de cette coquille 2 constitue l'image exacte de la surface extérieure du flanc du pneumatique que l'on souhaite mouler. A tous les endroits voulus, on perce un trou tel que 3 au travers de cette coquille 2. Il permet donc de mettre en communication la cavité intérieure "I" de moulage avec l'extérieur "E" du moule. Le trou 3 et l'insert 1 sont conçus de façon à présenter par exemple un ajustement H7/m6.

L'étape suivante consiste à enchâsser l'insert 1 à l'intérieur du trou 3, de préférence depuis le côté de la surface de moulage 20 (voir figures 5 et 6), jusqu'à ce que la face latérale 11 arrive presque au niveau de la surface de moulage 20 de la coquille 2 (voir figure 7). Bien entendu, si l'insert 1 comporte des rainures 13, il est nécessaire que l'extrémité 130 de ces rainures soit enfoncée à l'intérieur de l'épaisseur de la coquille 2, afin que ces rainures ne débouchent pas au niveau de la surface moulante 20. Etant donné les ajustements prévus, il n'y a pas de jeu fonctionnel entre l'insert 1 et la coquille 2. Du fait que la dureté de la matière plastique est nettement inférieure à la dureté de la matière métallique constituant la coquille 2, lorsque l'on enchâsse l'insert 1 à l'intérieur du perçage 3, la matière métallique réalise un léger usinage de la surface latérale 10 de l'insert 1. Cela provoque l'apparition de petits copeaux tels que 15, qui restent du côté de la cavité intérieure du moule. L'étape finale pour construire un évent consiste à araser l'insert 1 au moyen d'un outil tranchant afin de réaliser une surface moulante 19 se situant exactement et en totalité dans le prolongement de la surface moulante 20 de la paroi qui entoure l'insert 1 (figure 8).

Le moule que l'on obtient ainsi comporte donc un insert 1 réalisé en une matière dont la dureté est nettement inférieure à la dureté de la matière constituant essentiellement ladite paroi 2, ledit insert 1 ayant avant montage une section circonscrite à la section dudit perçage 3, au moins du côté destiné à affleurer à ladite surface de moulage, ledit insert 1 étant emmanché en force dans ledit perçage 3. Au stade final, ladite face d'extrémité 11 dudit insert 1, éventuellement après arasement pour constituer une surface de moulage 19, se situe entièrement dans le prolongement de la surface de moulage 20 de la paroi 2 bordant ledit perçage 3.

Bien entendu, au vu de la présente description, l'homme du métier pourra imaginer beaucoup de variantes possibles et beaucoup d'adaptations de la présente invention. Les ajustements cités ne le sont qu'à titre d'exemple. Il suffit de réaliser un serrage suffisant pour que l'insert 1 reste bien fixé à l'intérieur de la paroi de moulage. Il faut bien entendu que la pression du caoutchouc cru qui s'exerce sur la surface de moulage 11 ne permette pas d'enfoncer plus en profondeur l'insert 1 à l'intérieur du perçage 3.

La propension à l'encrassement des évents ainsi conçus est bien inférieure à ce que l'on a pu constater pour les évents en forme de fente, ou pour les perçages de diamètre extrêmement réduit. Cependant, il est possible que l'on constate à la longue une perte d'efficacité de l'éventation qu'il procure. Dans ce cas, l'opération de rénovation est extrêmement simple et peu coûteuse. Il suffit, au moyen d'un chasse goupille de diamètre adapté bien inférieur au diamètre du perçage 3, engagé dans le perçage 3 par l'extérieur E du moule, de retirer l'insert 1 hors du perçage 3 et de le remplacer par un insert neuf.

L'évent proposé par la présente invention ne comporte aucune pièce mobile. Il ne fait aucunement appel à une déformation quelconque ou à une flexibilité interne, pour permettre l'éventation. Si les matières utilisées pour cet insert présentent une dureté très largement inférieure à la dureté de la matière constituant le moule, il est possible d'utiliser des ajustements serrés, sans qu'il soit nécessaire de respecter une tolérance étroite pour le moulage de l'insert 1. Il est possible d'utiliser les matières plastiques sans que l'on ne puisse détecter d'influences fâcheuses dues à la conductibilité thermique plus faible des inserts par rapport à la paroi de moulage. L'état de vulcanisation du caoutchouc moulé au moyen d'un moule ainsi équipé reste tout à fait comparable à ce qui se produit avec des moules équipés d'évents métalliques ou non équipés d'évent.

La présente invention, utilisée avec d'autres techniques d'éventation à plus grand débit, permet d'obtenir l'éventation nécessaire dans tous les endroits de dernier moulage présentant une plus grande difficulté d'éventation. Elle contribue à réaliser un moule permettant le moulage de pneumatique sans défaut d'aspect. Son exploitation industrielle s'avère extrêmement fiable.

## Revendications

1. Moule ayant une cavité de moulage limitée par des parois (2) de moulages réalisées en une ou plusieurs matières, chaque paroi de moulage ayant une surface de moulage (20) étanche définissant une partie de la forme de la surface extérieure de l'objet à mouler, au moins une paroi (2) comprenant au moins un perçage (3) s'étendant à partir de ladite surface (20) au travers de ladite paroi (2) pour mettre en communication la cavité de moulage avec l'extérieur dudit moule, ledit perçage (3) étant obturé par un insert (1) ayant une face d'extrémité (11) étanche affleurant à ladite surface (20) pour constituer une partie de la surface de moulage, caractérisé en ce que ledit moule comporte des moyens principaux d'éventation et des moyens d'éventation complémentaire, ledit insert appartenant aux moyens d'éventation complémentaire, ledit insert (1) occupe exactement la totalité de la surface dudit perçage (3) dans ladite surface de moulage et en ce que ledit insert (1) est réalisé en une matière dont la dureté est nettement inférieure à la dureté de la matière constituant essentiellement ladite paroi (2), ledit insert (1) ayant, avant montage dans le perçage (3), une section circonscrite à la section dudit perçage (3), au moins du côté destiné à affleurer à ladite surface de moulage, ledit insert (1) étant emmanché en force dans ledit perçage (3).

2. Moule selon la revendication 1, caractérisé en ce que l'aire de la face d'extrémité (11) dudit insert (1) est inférieure à 100 mm2.

3. Moule selon la revendication 2, caractérisé en ce que l'aire de la face d'extrémité (11) dudit insert (1) est inférieure à 10 mm2.

4. Moule selon l'une des revendications 1 à 3, caractérisé en ce que ladite face d'extrémité (11) dudit insert (1) est située entièrement dans le prolongement de la surface de moulage (20) de la paroi (2) bordant ledit perçage (3).

5. Moule selon l'une des revendications 1 à 4, utilisé pour le moulage de pneumatiques.

6. Insert (1) pour l'éventation de moules, dont la matière constitutive présente une duretée très inférieure à la dureté d'une matière métallique, ledit insert étant en forme de tige allongée, présentant une surface latérale (10) et au moins une face d'extrémité (11) et une extrémité opposée (12), comportant, aménagées sur ladite surface latérale (10), des rainures (13) débutant à ladite extrémité opposée (12), et se terminant en retrait de ladite face d'extrémité (11).

7. Insert selon la revendication 6, caractérisé en ce que ladite surface latérale (11) est sensiblement cylindrique.

8. Insert selon la revendication 6, caractérisé en ce que ladite surface latérale (10) est au moins en partie tronconique, la section dudit insert (1) allant en se rétrécissant en se déplaçant vers le côté où lesdites rainures (13) débouchent à ladite extrémité opposée (12).

9. Procédé de réalisation d'un moule, ledit moule ayant une cavité de moulage limitée par des parois comportant chacune une surface de moulage, lesdites parois étant réalisées en une ou plusieurs matières, comprenant les étapes suivantes :
- réaliser, dans au moins une paroi, au moins un perçage s'étendant à partir de la surface de ladite paroi au travers de ladite paroi jusqu'à l'extérieur dudit moule,
- enfoncer dans ledit perçage, du côté de ladite surface de moulage, un insert dont la matère constitutive présente une dureté nettement inférieure à la dureté de la matière constituant ladite paroi aux environs du perçage, ledit insert, une fois enfoncé, occupant exactement la totalité de la surface du perçage au moins au niveau de ladite surface de la paroi, et étant immobilisé par serrage à l'intérieur dudit perçage et faisant au moins légèrement protubérance par rapport à ladite surface,
- araser ledit insert au niveau de ladite surface.

## Claims

1. A mould which has a moulding cavity which is limited by moulding walls (2) made of one or more materials, each moulding wall having an airtight moulding surface (20) defining a portion of the form of the outer surface of the object to be moulded, at least one wall (2) comprising at least one bore (3) extending from said surface (20) through said wall (2) in order to place the moulding cavity in communication with the outside of said mould, said bore (3) being closed by a plug (1) having an airtight end face (11) flush with said surface (20) in order to constitute a portion of the moulding surface, characterised in that said mould comprises main venting means and supplementary venting means, said plug forming part of the supplementary venting means, said plug (1) takes up exactly the entire surface of said bore (3) in said moulding surface, and in that said plug (1) is made of a material the hardness of which is distinctly less than the hardness of the material essentially constituting said wall (2), said plug (1) having, prior to mounting in the bore (3), a cross-section circumscribed in the cross-section of said bore (3), at least on the side intended to be flush with said moulding surface, said plug (1) being force-fitted in said bore (3).

2. A mould according to Claim 1, characterised in that the area of the end face (11) of said plug (1) is less than 100 mm².

3. A mould according to Claim 2, characterised in that the area of the end face (11) of said plug (1) is less than 10 mm².

4. A mould according to one of Claims 1 to 3, characterised in that said end face (11) of said plug (1) is located in its entirety in the extension of the moulding surface (20) of the wall (2) bordering said bore (3).

5. A mould according to one of Claims 1 to 4, used for moulding tyres.

6. A plug (1) for venting moulds, the hardness of the constituent material of which is far less than the hardness of a metallic material, said plug being in the form of an elongated rod, having a side surface (10) and at least one end face (11) and an opposite end (12) comprising, formed on said side surface (10), grooves (13) starting at said opposite end (12) and ending at a distance from said end face (11).

7. A plug according to Claim 6, characterised in that said side surface (11) is substantially cylindrical.

8. A plug according to Claim 6, characterised in that said side surface (10) is at least in part frusto-conical, the cross-section of said plug (1) decreasing in the direction towards the side where said grooves (13) open out on said opposite end (12).

9. A method of producing a mould, said mould having a moulding cavity defined by walls each comprising a moulding surface, said walls being made of one or more materials, comprising the following steps:
- producing, in at least one wall, at least one bore which extends from the surface of said wall through said wall to the outside of said mould,
- inserting into said bore, from the side of said moulding surface, a plug the hardness of the constituent material of which is distinctly less than the hardness of the material constituting said wall in the vicinity of the bore, said plug, once inserted, taking up precisely all of the area of the bore, at least at the level of said surface of the wall, and being locked by clamping within said bore, and protruding at least slightly with respect to said surface,
- levelling said plug to the level of said surface.

## Patentansprüche

1. Form, die einen Formhohlraum aufweist, der durch Formwände (2) begrenzt ist, die aus einem oder mehreren Materialien hergestellt sind, wobei jede Formwand eine dichte Formoberfläche (20) aufweist, die einen Teil der Form der Außenoberfläche des abzuformenden Gegenstandes festlegt, mindestens eine Wand (2), die mindestens eine Bohrung (3) aufweist, die sich von der genannten Oberfläche (20) aus quer zur genannten Wand (2) erstreckt, um den Formhohlraum mit der Außenseite der genannten Form in Verbindung zu setzen, und die genannte Bohrung (3) von einem Einsatz (1) verschlossen ist, der eine dichte Endfläche (11) aufweist, die in die genannte Oberfläche (20) bündig eingelassen ist, um einen Teil der Formoberfläche zu bilden, dadurch gekennzeichnet, daß die genannte Form Haupt-Entlüftungsmittel und ergänzende Entlüftungsmittel aufweist, wobei der genannte Einsatz zu den ergänzenden Entlüftungsmitteln gehört, wobei der genannte Einsatz (1) genau die Gesamtheit der Oberfläche der genannten Bohrung (3) in der genannten Formoberfläche einnimmt, und daß der genannte Einsatz (1) aus einem Material hergestellt ist, dessen Härte deutlich geringer ist als die Härte des Materials, das im wesentlichen die genannte Wand (2) bildet, wobei der genannte Einsatz (1) vor der Anbringung in der Bohrung (3) einen Querschnitt aufweist, der dem genannten Querschnitt der genannten Bohrung (3) umschrieben ist, und zwar mindestens auf der Seite, die dazu bestimmt ist, bündig in die genannte Formoberfläche eingelassen zu werden, und wobei der genannte Einsatz (1) gewaltsam in die genannte Bohrung (3) eingedrückt ist.

2. Form nach Anspruch 1, dadurch gekennzeichnet, daß das Flächenmaß der Endfläche (11) des genannten Einsatzes (1) kleiner ist als 100 mm².

3. Form nach Anspruch 2, dadurch gekennzeichnet, daß das Flächenmaß der Endfläche (11) des genannten Einsatzes (1) kleiner ist als 10 mm².

4. Form nach einem der Ansprüche 1 bis 3, dadurch gekennzeichnet, daß die genannte Endfläche (11) des genannten Einsatzes (1) gänzlich in der Verlängerung der Formfläche (20) der Wand (2) gelegen ist, die an die genannte Bohrung (3) angrenzt.

5. Form nach einem der Ansprüche 1 bis 4, verwendet für das Abformen von Reifen.

6. Einsatz (1) zum Entlüften von Formen, bei dem das Material, aus dem er besteht, eine Härte aufweist, die sehr viel kleiner ist als die Härte eines metallischen Materials, wobei der Einsatz die Form einer länglichen Stange aufweist, die eine Seitenfläche (10), mindestens eine Endfläche (11) und ein gegenüberliegendes Ende (12) aufweist, mit, in die genannte Seitenfläche (10) eingebracht, Rillen (13), die von dem genannten, gegenüberliegenden Ende (12) ausgehen und, gegenüber der genannten Endfläche (11) zurückversetzt, enden.

7. Einsatz nach Anspruch 6, dadurch gekennzeichnet, daß die genannte Seitenfläche (11) im wesentlichen zylindrisch ist.

8. Einsatz nach Anspruch 6, dadurch gekennzeichnet, daß die genannte Seitenfläche (10) mindestens teilweise kegelstumpfförmig ist, wobei der Querschnitt (1) mit seiner Verjüngung fortschreitet, wenn er sich zu der Seite hin versetzt, wo die genannten Rillen (13) in das genannte gegenüberliegende Ende (12) einmünden.

9. Verfahren zur Herstellung einer Form, wobei die genannte Form einen Formhohlraum aufweist, der durch Wände begrenzt ist, die jeweils eine Formoberfläche aufweisen, und wobei die genannten Wände aus einem oder mehreren Materialien hergestellt sind, mit den folgenden Schritten:
- in mindestens einer Wand mindestens eine Bohrung herstellen, die sich, von der Oberfläche der genannten Wand ausgehend, quer durch die genannte Wand bis zur Außenseite der genannten Form erstreckt,
- auf der Seite der genannten Formoberfläche einen Einsatz in die genannte Bohrung eindrücken, dessen Material, aus dem er gebildet ist, eine Härte aufweist, die deutlich niedriger ist als die Härte des Materials, das die genannte Wand in der Umgebung der Bohrung bildet, wobei der genannte Einsatz, wenn er erst einmal eingedrückt ist, genau die Gesamtheit der Oberfläche der Bohrung mindestens auf Höhe der genannten Oberfläche der Wand einnimmt, durch Klemmung im Inneren der genannten Bohrung festgelegt wird und mindestens eine leichte Ausstülpung in Bezug auf die genannte Oberfläche bildet, und
- verbringen des genannten Einsatzes auf die Höhe der genannten Oberfläche.
